# EUROPEAN PATENT SPECIFICATION

(11) **EP 3 759 283 B1**
(45) Date of publication and mention of the grant of the patent: **03.01.2024**
(21) Application number: 19719579.5
(22) Date of filing: 20.03.2019
(51) Int. Cl.: E02F 3/358, E02F 3/64, E02F 3/413, E02F 3/40

(54) **APPARATUS FOR HANDLING AND DISTRIBUTING PARTICULATE MATERIAL**
VORRICHTUNG ZUM HANDHABEN UND VERTEILEN VON TEILCHENFÖRMIGEM MATERIAL
APPAREIL DE MANIPULATION ET DE DISTRIBUTION D'UN MATÉRIAU PARTICULAIRE

(43) Date of publication of application: 06.01.2021
(73) Proprietor: QSACC SERVICES LIMITED, 1 Brook Close Dorking, Surrey RH4 1AH (GB)
(72) Inventor: FURLONG, Patrick Anthony, Dorking Surrey RH4 1AH (GB); GOUSSET, Antoine Thomas Sylvain, 44000 Nantes (FR); PERRY, Mark Andrew James, Donegal Town County Donegal F94 TF8P (IE)
(74) Representative: Fry, David John
(86) International application number: PCT/GB2019/000050
(87) International publication number: WO 2019/166758

(56) References cited:
- CN-U- 205 776 440
- GB-A- 961 426
- US-A- 3 125 234
- US-A- 3 341 041
- US-A- 3 375 595
- US-A- 3 521 782
- US-A- 3 917 089

## Description

### Field of the Invention

This invention relates to apparatus for handling and distributing particulate material. In a preferred embodiment, the invention relates to a vehicle trailer which includes a tip bucket assembly for moving and spreading loose material such as sand, gravel, earth and demolition waste. The invention further relates to a vehicle in combination with such a trailer.

### Background to the invention

Vehicles including material handling apparatus are well known particularly in the construction industry for moving and spreading loose materials such as earth and gravel. Because of their size such vehicles are generally not suited for working in confined areas where space is at a premium but where there remains a need to move materials from one location to another and/or to spread particulate materials over a defined area, examples of such apparatus can be found in US3.125,234, US3917089, US3521782, US3375595, US3341041, GB961.426 and EN205776440.

The present invention sets out to material handling apparatus able to operate in confined areas.

### Summary of the Invention

In one aspect, the invention provides a material handling apparatus which comprises a vehicle trailer including a tip bucket assembly suspended between the upper ends of a pair of elongate arms whose lower ends are secured to and rotatable with a generally horizontal shaft supported on the chassis of the trailer, and means for imparting rotation to said shaft, said material handling apparatus being characterised in that tip bucket assembly comprises two separable clam shell shaped sections moveable between a first closed position in which their adjacent sides abut to define a unitary open-topped tip bucket assembly and a second open position in which to define a grab assembly, the adjacent sides of the tip bucket assembly including latches for selectively connecting and separating the clam shell shaped sections one to another, the two clam shell shaped sections separate.

The means for imparting rotation to said shaft preferably comprises a crank assembly located on said shaft and connected to a hydraulic or pneumatic ram.

The shaft may be supported between bearing assemblies located on the chassis of the trailer.

The trailer chassis may be generally "U" shaped with the shaft extending between rearwards extending arms of the chassis. Preferably, releasable latches are provided to connect and disconnect the clam shell sections.

### Brief Description of the Drawings

The invention will now be described by way of example only with reference to the accompanying diagrammatic drawings in which:-
Figure 1 shows in side elevation an articulated vehicle and trailer including a tip bucket assembly in accordance with the invention;
Figures 2, 3 and 4 are respectively side, isometric and plan views of the trailer and tip bucket assembly illustrated in

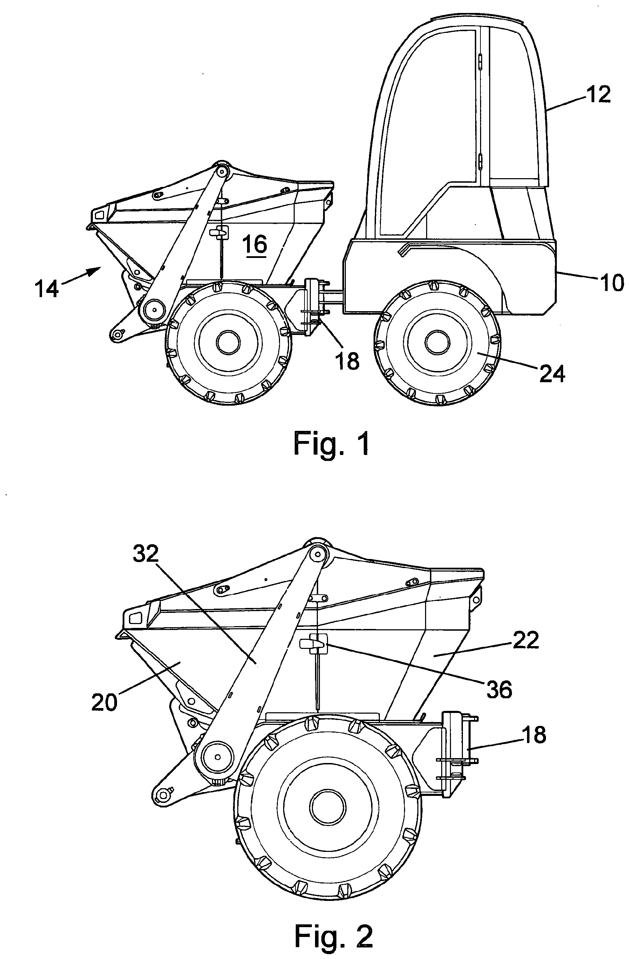

Figure 1 with the tip bucket in its start position on the trailer;

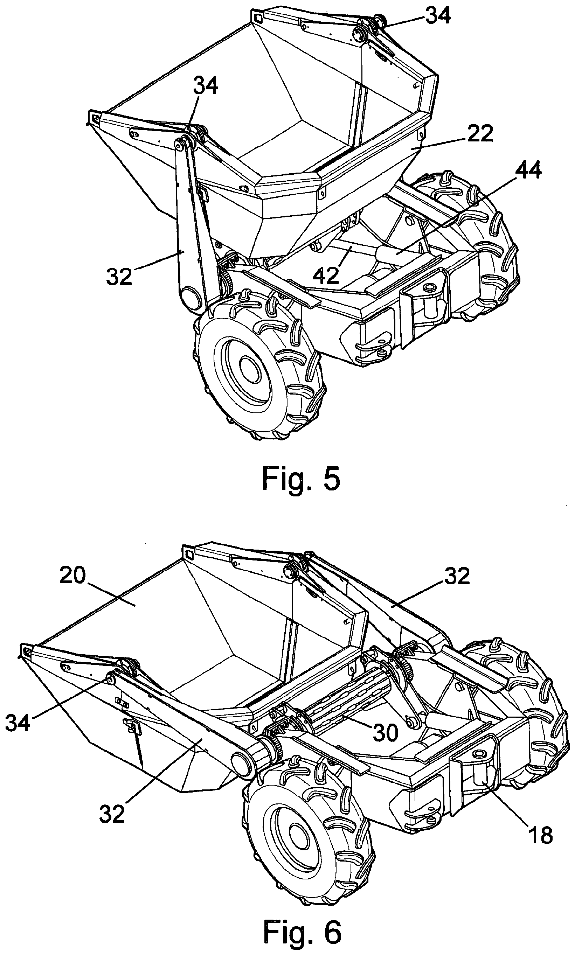

Figure 5 is an isometric view of the illustrated trailer and tip bucket assembly with the tip bucket in an elevated position;
Figure 6 is an isometric view of the illustrated trailer and tip bucket assembly with the tip bucket in a lowered generally horizontal position;

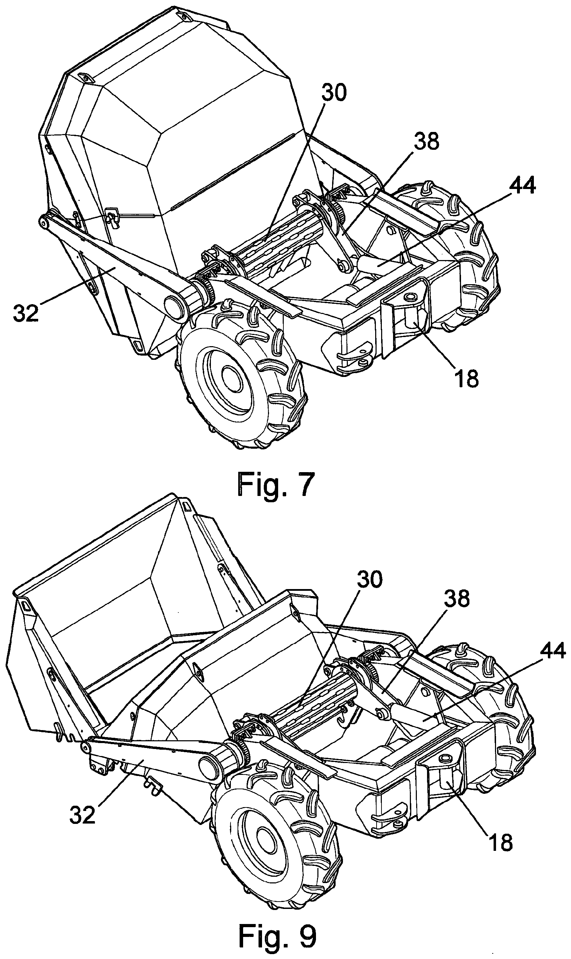

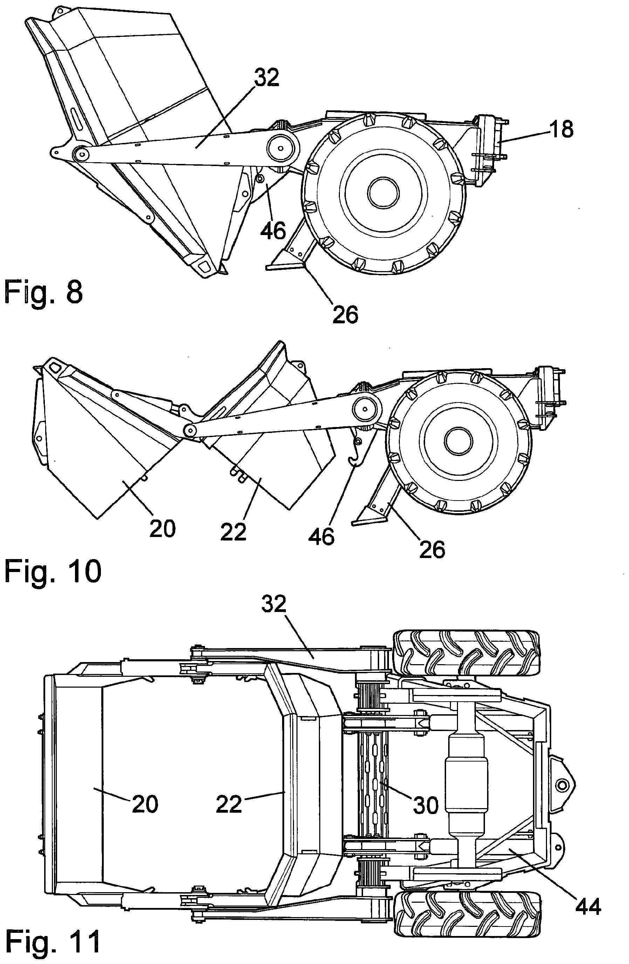

Figures 7 and 8 are respectively isometric and side views of the illustrated trailer and tip bucket assembly with the tip bucket in an inclined position;
Figure 9 is an isometric view of the illustrated trailer and tip bucket assembly with the tip bucket in an open position; and
Figures 10 and 11 are respectively side and plan views from above of the illustrated trailer with the tip bucket in an open position.

### Detailed description of the invention

The articulated vehicle illustrated in the drawings comprises a motorised section 10 including a driver's cabin 12 and a wheel mounted trailer section 14 which includes a tip bucket assembly 16. The trailer section 14 is connected to the motorised section through a conventional coupling unit 18. The coupling unit is operable selectively to connect and disconnect the motorised and trailer sections of the vehicle.

As will be described in more detail below, the tip bucket assembly 16 comprises a pair of clam shell shaped sections 20, 22 which can selectively be connected together through side latches 36 to define a conventional tip bucket assembly for receiving and transporting particulate material, debris and the like, or separated by releasing the latches 36 to define a grab assembly for *inter alia* moving piles of granulated material such as earth and gravel.

The motorised section 10 of the vehicle includes a conventional engine unit operable to impart drive to a pair of driven wheels 24, and a steering wheel coupled to conventional steerage apparatus. As illustrated, the motorised and trailer sections of the vehicle are each supported on a single pair of wheels, extendable feet 26 (see Figure 8) being provided to retain the motorised and trailer sections in the illustrated positions when the sections are separated.

In an alternative unillustrated embodiment, one or each of the motorised and trailer sections includes a plurality of wheel pairs.

The trailer section 14 is positioned to the front of the motorised section 10 and comprises a generally "U" shaped chassis 28 (see particularly Figure 11). Between the rearwards extending arms of the chassis 28 is supported a rotatable drive shaft 30, the shaft ends being supported within conventional bearing assemblies.

Secured to and rotatable with the drive shaft 30 are a pair of elongate lifting arms 32 whose ends remote from the drive shaft 30 are connected through spindles 34 to opposite sides of the tip bucket assembly 16. As will be seen from the drawings, the spindles 34 pass through overlapping flanges of the tip bucket sections 20, 22 and co-operate with pivot assemblies to enable the sections 20, 22 to move between the illustrated closed and open positions.

Also mounted on and driven by the drive shaft are a pair of crank assemblies. Each assembly includes a pair of parallel link members 38 between which is supported a pivot 40 connected to the exposed end of a piston 42 of a hydraulic or pneumatic ram 44.

In operation, movement of the pistons 42 imparts rotation to the link members 38 and consequently the shaft 30 to move the elongate lifting arms 32 and the tip bucket assembly 16 between the various positions illustrated in the accompanying drawings. The rams 44 are preferably operated through controls located in the motorised section of the vehicle. To facilitate this, hose pipes are provided to link appropriate apparatus in the motorised section 10 to the hydraulic fluid or gas inlets of the pistons 42 as and when required.

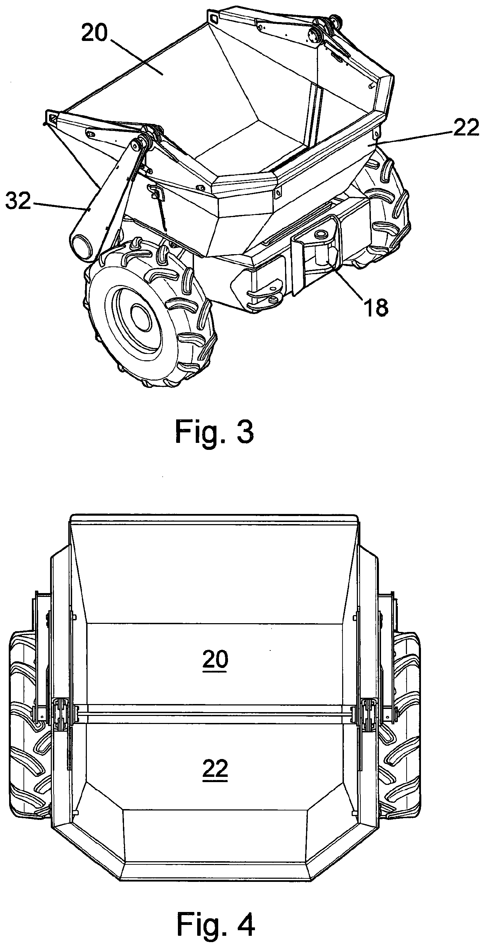

As mentioned above, the tip bucket assembly 16 has two clam shell shaped sections 20, 22 whose side edges abut when the assembly is in the position illustrated in Figures 1 to 8 and are separated when in the position illustrated in Figures 9 to 11. The clam shell shaped sections 20, 22 include co-operating side latches 36 which can be operated manually or remotely to secure the clam shell sections together but which can be selectively released to enable the sections to separate.

Thus, in the position illustrated in Figures 1 to 8 the clam shells together define a conventional tip bucket assembly and in the position illustrated in Figures 9 to 11 the clam shells define a generally conventional grab assembly.

Figures 2 to 4 of the drawings show the tip bucket assembly 16 in its "at rest" position. In this position the tip bucket is supported on the chassis 28 with its lifting arms 32 inclined towards the motorised section 10 and can be employed, for example, to collect and remove debris from a site.

In Figure 5 the tip bucket assembly 16 is shown in its fully raised position. To reach this position, the drive shaft 28 is rotated by movement of the pistons 42 and the crank assemblies 36 to cause the lifting arms 32 to pivot from their initially inclined positions to the illustrated generally vertical positions.

In the position shown in Figure 6 of the drawings, the tip bucket is shown in its forward-most position, the shaft 30 having been further rotated by operation of the pistons 42 to move the arms 32 to the illustrated generally horizontal positions.

As will be seen from Figure 7 and 8, the tip bucket assembly can be moved from the position shown in Figure 6 to a position in which the tip bucket is fully inclined with its sides lying generally normal to the ground, a hook assembly 46 being provided to retain the tip bucket sections 20, 22 in the illustrated position. In this position, the contents of the tip bucket can be emptied and/or the front edge of the skip bucket can be employed as a blade to move soil or particulate material. To assist such movement, the lip of the tip bucket section 20 is relatively sharp.

Figures 9 to 11 show the tip bucket assembly with the side latches 36 released to define a grab assembly for scooping particulate material such as soil and gravel from the ground. Separation of the clam shell shaped sections 38 is effected by operation of hydraulic rams 52 positioned one on each side of the tip bucket assembly. The rams are operable remotely from, for example, the motorised vehicle section 10 or manually and the degree of separation of the clam shell sections may be between positions in which the side edges of the clam shell sections lie substantially horizontal and in which the side edges are positioned alongside one another.

Thus, the invention provides a relatively small and mobile vehicle mounted tip bucket assembly able to complete all, or at least a majority of, tasks currently completed by conventional and much less manoeuvrable material handling equipment.

It will be appreciated that the foregoing is merely exemplary of apparatus in accordance with this invention and that modifications can readily be made to the described and illustrated without departing from the invention as set out in the appended claims.

## Claims

1. Material handling apparatus which comprises a vehicle trailer (14) including a tip bucket assembly (16) suspended between the upper ends of a pair of elongate arms (32) whose lower ends are secured to and rotatable with a generally horizontal shaft (30) supported on the chassis of the trailer, and means for imparting rotation to said shaft, said material handling apparatus being **characterised in that** tip bucket assembly (16) comprises two separable clam shell shaped sections (20,22) moveable between a first closed position in which their adjacent sides abut to define a unitary open-topped tip bucket assembly and a second open position in which to define a grab assembly, the adjacent sides of the tip bucket assembly including latches (36) for selectively connecting and separating the clam shell shaped sections (20,22) one to another, the two clam shell shaped sections separate.

2. Apparatus as claimed in claim 1, **characterised in that** the means for imparting rotation to said shaft comprises a crank assembly located on said shaft (30) and connected to a hydraulic or pneumatic ram (44).

3. Apparatus as claimed in claim 2, **characterised in that** two spaced crank assemblies are provided.

4. Apparatus as claimed in any one of claims 1 to 3, **characterised in that** the shaft is supported between bearing assemblies located on the chassis of the trailer.

5. Apparatus as claimed in any one of the preceding claims, **characterised in that** the trailer chassis is generally "U" shaped with the shaft extending between rearwards extending arms of the chassis.

## Patentansprüche

1. Materialhandhabungsvorrichtung, die einen Fahrzeuganhänger (14) umfasst, der eine Kippschaufelanordnung (16), die zwischen den oberen Enden eines Paares länglicher Arme (32) aufgehängt ist, deren untere Enden an einer im Allgemeinen horizontalen Welle (30) befestigt und mit dieser drehbar sind, die am Fahrgestell des Anhängers gelagert ist, und Mittel, um der Welle eine Drehung zu verleihen, beinhaltet, wobei die Materialhandhabungsvorrichtung **dadurch gekennzeichnet ist, dass** die Kippschaufelanordnung (16) zwei trennbare, muschelschalenförmige Abschnitte (20, 22) umfasst, die zwischen einer ersten geschlossenen Position, in der ihre benachbarten Seiten anliegen, um eine einheitliche, oben offene Kippschaufelanordnung zu definieren, und einer zweiten offenen Position beweglich sind, in der, um eine Greifanordnung zu definieren, die benachbarten Seiten der Kippschaufelanordnung Riegel (36) zum selektiven miteinander Verbinden und Trennen der muschelschalenförmigen Abschnitte (20,22) beinhalten, sich die beiden muschelschalenförmigen Abschnitte trennen.

2. Vorrichtung nach Anspruch 1, **dadurch gekennzeichnet, dass** die Mittel, um der Welle eine Drehung zu verleihen, eine Kurbelanordnung umfassen, die sich auf der Welle (30) befindet und mit einem Hydraulik- oder Pneumatikzylinder (44) verbunden ist.

3. Vorrichtung nach Anspruch 2, **dadurch gekennzeichnet, dass** zwei beabstandete Kurbelanordnungen vorgesehen sind.

4. Vorrichtung nach einem der Ansprüche 1 bis 3, **dadurch gekennzeichnet, dass** die Welle zwischen Lageranordnungen gelagert ist, die sich am Fahrgestell des Anhängers befinden.

5. Vorrichtung nach einem der vorhergehenden Ansprüche, **dadurch gekennzeichnet, dass** das Anhängerfahrgestell im Allgemeinen "U"-förmig ist, wobei sich die Welle zwischen sich nach hinten erstreckenden Armen des Fahrgestells erstreckt.

## Revendications

1. Appareil de manipulation de matériau qui comprend une remorque de véhicule (14) comprenant un ensemble godet d'extrémité (16) suspendu entre les extrémités supérieures d'une paire de bras allongés (32) dont les extrémités inférieures sont fixées et peuvent tourner avec un arbre globalement horizontal (30) supporté sur le châssis de la remorque, et un moyen pour transmettre une rotation audit arbre, ledit appareil de manipulation de matériau étant **caractérisé en ce que** l'ensemble godet d'extrémité (16) comprend deux sections séparables en forme de coquillage (20, 22) mobiles entre une première position fermée dans laquelle leurs côtés adjacents sont en butée pour définir un ensemble godet d'extrémité unitaire à partir supérieure ouverte et une seconde position ouverte dans laquelle ils définissent un ensemble benne preneuse, les côtés adjacents de l'ensemble godet d'extrémité comprenant des verrous (36) en vue du raccordement et de la séparation sélectives des sections en forme de coquillage (20, 22) l'une à/de l'autre, les deux sections en forme de coquillage se séparent.

2. Appareil selon la revendication 1, **caractérisé en ce que** le moyen pour transmettre une rotation audit arbre comprend un ensemble manivelle situé sur ledit arbre (30) et raccordé à un vérin hydraulique ou pneumatique (44).

3. Appareil selon la revendication 2, **caractérisé en ce que** deux ensembles manivelles espacés sont prévus.

4. Appareil selon l'une quelconque des revendications 1 à 3, **caractérisé en ce que** l'arbre est supporté entre des ensembles de roulements situés sur le châssis de la remorque.

5. Appareil selon l'une quelconque des revendications précédentes, **caractérisé en ce que** le châssis de remorque est globalement en forme de "U", l'arbre s'étendant entre les bras du châssis qui s'étendent vers l'arrière.
